# EUROPÄISCHE PATENTANMELDUNG

(11) **EP 2 159 202 A1**
(43) Veröffentlichungstag der Anmeldung: **03.03.2010**
(21) Anmeldenummer: 08015188.9
(22) Anmeldetag: 28.08.2008
(51) Int. Cl.: C04B 22/00

(54) **Bindemittel, Zusammensetzung umfassend einen Hüttensand und ein Additiv sowie Verfahren zur Herstellung eines Baustoffs**

(71) Anmelder: Verein Deutscher Zementwerke e. V., 40476 Düsseldorf (DE)
(72) Erfinder: Wassing, Walter, Dr., 40699 Erkrath (DE); Tigges, Vera, 40476 Düsseldorf (DE)
(74) Vertreter: Tilmann, Max Wilhelm

(57) **Zusammenfassung**

Bindemittel enthaltend ein Additiv, wobei das Additiv mindestens eine reaktive AluminiumVerbindung ist, die die Reaktion von zugesetztem Wasser und zugesetzten und/oder endogenen Silikaten zu silikatreichem Hydrogel verlangsamt, vermindert und/oder inhibiert und/oder entstandenes Silikathydrogel bindet.

## Beschreibung

Die Erfindung betrifft ein Bindemittel, Zusammensetzung umfassend einen Hüttensand und ein Additiv sowie Verfahren zur Herstellung eines Baustoffs.

Das Bestreben der Zementindustrie, neue Wege zur ökologischen Herstellung von Bindemitteln zu finden, drückt sich vor allem im zunehmenden Ersatz von Zementklinker durch andere Zementhauptbestandteile aus. Die bindemittelprägenden Eigenschaften des Zementklinkers verringern sich jedoch oft in dem Maße, in dem sein Anteil im Bindemittel reduziert wird. Wenn die anderen, den Klinker ersetzenden Zementhauptbestandteile diese Eigenschaften nicht kompensieren, dann prägt sich die Klinkersubstitution im Bindemittel aus.

Die Eigenschaften der Substituenten können jedoch auch neue gewünschte Bindemitteleigenschaften wie etwa erhöhte Sulfatbeständigkeit hervorrufen. Dies ist beispielsweise bei Hochofenzementen der Fall, in denen ein erheblicher Anteil des Klinkers durch Hüttensand ersetzt ist. Allerdings führt im Fall von Hochofenzementen der Ersatz von Zementklinker oft zu einer Verringerung der Frühfestigkeit.

Vor diesem Hintergrund lag der Erfindung die Aufgabe zu Grunde, ein Bindemittel, eine Zusammensetzung und ein Verfahren zur Herstellung eines Baustoff zu schaffen, die einen Nachteil des Standes der Technik vermeiden.

Diese Aufgabe wird durch den Gegenstand der nebengeordneten Ansprüche gelöst. Vorteilhafte Ausgestaltungen der Erfindung sind in den Unteransprüchen und der Beschreibung wiedergegeben.

Die Erfindung geht von dem Grundgedanken aus, daß freies Silikathydrogel die Frühfestigkeit von hochofenzementgebundenen Baustoffen verringert. Wenn ein Hüttensand eine ausreichende Menge verfügbaren Aluminiums enthält, kann das Silikat des Hüttensandes in Alumosilikaten gebunden werden. Diese Alumosilikate stellen eine Diffusionsbarriere für das weitere Eindringen von Wasser in das korrodierende Hüttensandglas dar. Auf diese Weise wird sowohl die Entstehung freien, d. h. ungebundenen Silikathydrogels vermieden als auch das Ausmaß der Glaskorrosion verringert, die als Voraussetzung für die Silikathydrogelfreisetzung angesehen werden kann. Calcium kann Silikathydrogel in Calciumsilikathydrate (CSH) umwandeln. Auf der Oberfläche von Hüttensandpartikeln abgeschieden, stellen diese ebenfalls eine Diffusionsbarriere für deren weitere schnelle Korrosion dar. Gleichzeitig sind CSH-Phasen hinsichtlich der mechanischen Belastbarkeit von Normmörtelprismen nicht derart nachteilig wie die offensichtlich sehr plastischen Hydrogele aus reinem Silikat.

Im Falle von Hochofenzementen mit stark gelbildenden Hüttensanden, wirkt sich die Vermeidung der Gelbildung oder die Bindung des Silikathydrogels positiv auf deren Normmörteldruckfestigkeit aus. Eine Verbesserung der Festigkeit wird außerdem vor allem zu den Hydratationszeitpunkten erzielt, zu denen die Druckfestigkeiten sehr gering sind und sofern dies auf die Gegenwart von silikatreichen Hydrogelen zurückzuführen ist. In dem Maße, in dem sich im weiteren Verlauf der Hydratation dieser Hochofenzemente die Hydrogele aufgrund chemischer Umwandlung (z. B. in CSH-Phasen) oder schlicht durch fortschreitende Trocknung in weniger plastische Phasen wandeln, wird sich ihre negative Auswirkung auf die Druckfestigkeit des Hochofenzementsteins verringern. Deshalb kann auch eine Verbesserung der Normdruckfestigkeit durch Bindung oder Vermeidung von silikatreichen Hydrogelen mit zunehmender Hydratationszeit schwächer ausgeprägt sein. Genau das entspricht den Wünschen der Zementhersteller: Erhöhung der Frühfestigkeit ohne gleichzeitige Erhöhung der bei Hochofenzementen oft bereits sehr guten Endfestigkeit.

Das erfindungsgemäße Bindemittel enthält ein Additiv, das mindestens eine reaktive Aluminium-Verbindung ist, die die Reaktion von zugesetztem Wasser und zugesetzten oder endogenen Silikaten zu silikatreichem Hydrogel verlangsamt, vermindert und/oder inhibiert und/oder bereits entstandenes Silikathydrogel bindet. Unter zugesetztem Wasser versteht man dabei Wasser, das mit dem Bindemittel in Kontakt kommt, beispielsweise beim Herstellen eines Baustoffs aus dem Bindemittel. Endogene Silikate sind Silikate, die das Bindemittel selbst aufweist. Unter zugesetzten Silikaten werden Silikate verstanden, die dem fertigen Bindemittel in einem nachfolgenden Schritt, beispielsweise beim Herstellen eines Baustoffs aus dem Bindemittel, zugesetzt werden.

Als Bindemittel wird dabei insbesondere ein Bindemittel zur Herstellung eines Baustoffs verstanden, insbesondere jedwelches Gemisch von Stoffen, das unter anderem mineralische Stoffe umfaßt, die durch Kristallisation oder Trocknung eine hohe Festigkeit erreichen. Das Bindemittel kann ein hydraulisches Bindemittel sein, das sowohl an der Luft als auch unter Wasser härtet, wie z.B. Zement, Mischbinder, hydraulischer Kalk, Putz- und Mauerbinder auf Zement-/Acryl-Basis. Ebenso kann das Bindemittel ein nichthydraulisches Bindemittel (auch Luftbindemittel) sein, das nur an der Luft härtet, wie z. B. Luftkalke, Gips, Magnesiabinder, Lehm.

Die Erfindung ist jedoch nicht auf derartige Bindemittel beschränkt, insbesondere nicht auf Bindemittel für Baustoffe. Zwar wurden die Erkenntnisse an Untersuchungen von Hochofenzement gewonnen, der durch die Untersuchungen herausgearbeitete Mechanismus, daß mindestens eine reaktive Aluminium-Verbindung eingesetzt werden kann, um in einem Bindemittel die Reaktion von zugesetztem Wasser und zugesetzten oder bereits vorhandenen Silikaten zu silikatreichem Hydrogel zu verlangsamen, zu vermindern und/oder zu inhibieren und/oder entstandene Silikathydrogele zu binden, ist auch bei anderen Stoffgemischen anwendbar, die bei Zugabe von Wasser und zugesetzten oder vorhandenen Silikaten eine Reaktion zu silikatreichem Hydrogel zeigen.

Darüber hinaus ist die Erfindung bei allen Bindemitteln anwendbar, bei denen intermediär gebildete Gele eine frühe Verfestigung des Bindemittels verringern und das Additiv die Gelbildung verlangsamt, vermindert und/oder inhibiert oder das im Bindemittel bereits entstandene Gel bindet.

In einer bevorzugten Ausführungsform ist das Bindemittel ein Gemisch aus einem Zementklinker und einem oder mehreren Additiven, bzw. ein Gemisch aus einem Zement und einem oder mehreren Additiven. Neben dem Additiv, das mindestens eine reaktive Aluminium-Verbindung ist, die die Reaktion von zugesetztem Wasser und Silikaten zu silikatreichem Hydrogel verlangsamt, vermindert und/oder inhibiert, kann das Bindemittel noch weitere Additive, wie beispielsweise einen Hüttensand aufweisen.

Ergänzend oder alternativ enthält das erfindungsgemäße Bindemittel ein Additiv, das eine reaktive Aluminium-Verbindung ist, die in der Lage ist, in Gegenwart von Wasser und Silikaten Alumosilikat, Calciumsilikathydrat und/oder Calciumaluminathydrat auszubilden. Dies Additiv kann das Additiv sein, das mindestens eine reaktive Aluminium-Verbindung ist, die die Reaktion von zugesetztem Wasser und Silikaten zu silikatreichem Hydrogel verlangsamt, vermindert und/oder inhibiert.

Unter einer reaktiven Aluminium-Verbindung, wird insbesondere eine vor allem thermisch aktivierte und/oder energiereiche Aluminiumverbindung verstanden. Insbesondere wird als eine reaktive Aluminium-Verbindung ein reaktives Aluminat und insbesondere bevorzugt Metakaolin, Calciumaluminat, Calciumaluminatzement, aluminiumreiche Flugasche und/oder eine Mischung enthaltend eine oder mehrere dieser Verbindungen eingesetzt.

In einer bevorzugten Ausführungsform weist das Bindemittel mindestens 3 Gew%, bevorzugt 3 bis 10 Gew.-%, insbesondere bevorzugt 3 bis 5 Gew.-% bezogen auf das Bindemittel einer reaktiven Aluminium-Verbindung auf. Werden diese Mengen reaktiver Aluminium-Verbindungen in das Bindemittel eingebracht, so wird die Bildung silikatreichem Hydrogel besonders gut verlangsamt, vermindert und/oder inhibiert.

In einer bevorzugten Ausführungsform weist das Bindemittel ein zusätzliches Additiv mit einem Überschuss an Silikaten auf, die in Gegenwart von Wasser ein silikatreiches Hydrogel bilden. Beispielsweise kann das zusätzliche Additiv Hüttensand sein. Der Überschuss an Silikaten kann innerhalb der ersten 2 bis 7 oder auch bis zu 28 Tage nach Kontakt mit Wasser zur Bildung des silikatreichen Hydrogels führen, welches die verminderte Frühfestigkeit des aus dem Bindemittel hergestellten Stoffs bedingt. Zur verlangsamten Bildung, verminderten Bildung und/oder Inhibierung der Hydrosilikatbildung wird dem Bindemittel eine reaktive Aluminium-Verbindung vorzugsweise in annähernd stöchiometrischen Mengen zur Bildung von Alumosilikaten und/oder Calciumsilikathydraten zugesetzt.

Bevorzugt kann das erfindungsgemäße Bindemittel als Additiv Hüttensand mit einem Überschuss an Silikat und/oder titandioxidreicher Hüttensand und/oder Puzzolan und/oder Flugasche aufweisen. Ein solches Bindemittel kann nach Wasserzugabe eine verbesserte Frühfestigkeit nach 2 bis 7 Tagen erreichen, insbesondere entsprechend der EN 196-1 (2000). Als titandioxidreiche Hüttensande werden Sande mit einem Titandioxidgehalt von größer gleich 1 Gew.-%, insbesondere im Bereich von 1,3 Gew.% bis 2 Gew.-% verstanden. Insbesondere bevorzugt ist der Hüttensand einer der Hüttensande, die als Zementhauptbestandteil eingesetzt werden, insbesondere bevorzugt einer der Hüttensande, die eine chemische Zusammensetzung haben, die im wesentlichen der Zusammensetzung der Hüttensande HS O, HS P, HS Q, HS C, HS D und/oder HS E, bevorzugt HS P, HS Q, HS C, HS D und/oder HS E, gemäß Tabelle 1, entsprecht, die insbesondere über einen molaren Silikatüberschuss von größer 4 Mol.-% bis zu 20 Mol.-% verfügen.

In einer bevorzugten Ausführungsform liegt vor der Zugabe des eine reaktive Aluminium-Verbindung enthaltenden Additives der Überschuss an Silikat im Bindemittel, welcher insbesondere nicht in einem Alumosilikat oder Calciumsilikathydrat gebunden ist oder gebunden werden kann, zwischen 0,5 bis 20 Mol.-% Silizium. Der Überschuss an Silikat, im Folgenden auch als Silikatüberschuss bezeichnet, welcher insbesondere nicht in Alumosilikaten und/oder Caciumsilikaten gebunden ist, liegt zwischen 0,5 bis 20 Mol.-% oder höher bezogen auf das Silizium des noch nicht mit dem Additiv versetzten Bindemittels, insbesondere liegt der Überschuss zwischen 1 bis 15 Mol.-%, bevorzugt zwischen 4 bis 15 Mol.-%, besonders bevorzugt zwischen 5 bis 15 Mol.-%.

In einer bevorzugten Ausführungsform weist das Bindemittel einen Portlandzement der Norm CEM I, einen Portlandkompositzement der Norm CEM II, Portlandhüttenzement der Norm CEM II/S, einen Hochofenzement der Norm CEM III, einen Puzzolanzement der Norm CEM IV oder einen Kompositzement der Norm CEM V oder eine Mischung mindestens zweier der genannten Zemente auf. (CEM-Bezeichnungen nach EN 197 (2000))

In einer bevorzugten Ausführungsform ist das Bindemittel eine Mischung aus 65 Gew.% Hüttensand mit 29,76 Gew.-% Portlandzement, 2,665 Gew.-% Gips und 2,665 Gew.-% Anhydrit. Als Hüttensande können HS O, HS P, HS Q, HS C, HS D und HS E gemäß Tabelle 1 verwendet werden.

In einer bevorzugten Ausführungsform weist das Bindemittel ein Inert-Additiv auf, dessen Anteil in Gew.% an dem Bindemittel den Anteil in Gew.% an dem Bindemittel des Additivs nicht übersteigt, insbesondere dem Anteil in Gew.% an dem Bindemittel des Additivs entspricht. Das Inert-Additv kann Kalksteinmehl sein.

Die erfindungsgemäße Zusammensetzung umfaßt einen Hüttensand und ein Additiv, wobei
- das Additiv mindestens eine reaktive Aluminium-Verbindung ist, die die Reaktion von zugesetztem Wasser und Silikaten des Hüttensandes zu silikatreichem Hydrogel verlangsamt, vermindert und/oder inhibiert und/oder
- das Additiv eine reaktive Aluminium-Verbindung ist, die in der Lage ist, in Gegenwart von Wasser und Silikaten Alumosilikat, Calciumsilikathydrat und/oder Calciumaluminathydrat auszubilden.

In einer bevorzugten Ausführungsform ist die reaktive Aluminium-Verbindung Metakaolin, Calciumaluminat, Calciumaluminatzement und/oder eine Mischung enthaltend eine oder mehrere Verbindungen.

In einer bevorzugten Ausführungsform weist die Zusammensetzung ein Inert-Additiv auf, dessen Anteil in Gew.% an dem Bindemittel den Anteil in Gew.% an dem Bindemittel des Additivs nicht übersteigt, insbesondere dem Anteil in Gew.% an dem Bindemittel des Additivs entspricht. Das Inert-Additiv kann Kalksteinmehl sein.

Das erfindungsgemäße Verfahren zur Herstellung eines Baustoff sieht vor, daß einem Gemisch Wasser zugesetzt wird, das Gemisch und das Wasser vermischt werden und zur Bildung des Baustoffs aushärten, wobei das Gemisch ein erfindungsgemäßes Bindemittel und/oder eine erfindungsgemäße Zusammensetzung aufweist.

In einer bevorzugten Ausführungsform weist das Gemisch ein Additiv oder eine ein Additiv enthaltende Zusammensetzung auf, wobei das Additiv eine reaktive Aluminium-Verbindung ist, die in der Lage ist, in Gegenwart von Wasser Alumosilikat, Calciumsilikathydrat und/oder Calciumaluminathydrat auszubilden, und das Additiv
a) beim Mischen von in dem Gemisch vorhandenen Hüttensand, Portlandlandzement, Gips und/oder Anhydrit und/oder
b) nach dem Mischen in Schritt a) dem Produkt dieses Mischens in Schritt a) zugesetzt wird.

In einer bevorzugten Ausführungsform des Verfahrens weist der damit gebildete Baustoff eine erhöhte Frühfestigkeit in Bezug auf einen im Wesentlichen qualitativ und quantitativ gleichwertig zusammengesetzten Baustoff auf, bei dem statt Additiv ein gleichgewichtiger Anteil eines Inert-Additivs enthalten ist. Insbesondere beträgt die Erhöhung der 2-Tage-Normdruckfestigkeit, auch als Frühfestigkeit bezeichnet, zwischen 40 bis 95 %, bevorzugt um 50 bis 95 %, besonders bevorzugt um 60 bis 92 %, in Bezug auf Baustoff, beispielsweise Mörtel ohne zugesetztes Additiv, aber mit einem gleichgewichtigen Anteil an Inert-Additiv. Als Inert-Additiv kann beispielsweise Kalksteinmehl verwendet werden. Insbesondere ist die Normdruckfestigkeit des Baustoffs nach bis zu 7-tägiger Hydratation um bis zu 95 % erhöht in Bezug auf einen im wesentlichen qualitativ und quantitativ gleichwertig zusammengesetzten Baustoff, bei dem statt Additiv ein gleichgewichtiger Anteil eines Inert-Additivs enthalten ist. Insbesondere ist die Normdruckfestigkeit bis zu 93 % erhöht, bevorzugt bei Mörtel, der auf HS E basiert. Insbesondere bevorzugt ist die Endfestigkeit im Wesentlichen nicht erhöht.

In einer erfindungsgemäßen Verwendung wird reaktives Aluminat in Gemischen zur Hemmung der Glaskorrosion eingesetzt.

Gemäß einer erfindungsgemäßen Verwendung werden das erfindungsgemäße Bindemittel oder die erfindungsgemäße Zusammensetzung zur Herstellung von Mörtel, insbesondere von Normmörtel nach EN 196-1 (2005) oder Beton verwendet.

### Beispiele:

Zur Untersuchung des Einflusses verschiedener Additive wurde eine Gruppe von sechs Hochofenzementen herangezogen, die sich hinsichtlich ihrer Normdruckmörteldruckfestigkeiten und deren Entwicklung über die Zeit stark unterscheiden. Die Hochofenzemente wurden durch Mischen der entsprechenden Hüttensande HS O, HS P, HS Q, HS C, HS D und HS E (65,00 %) mit Portlandzement (PZ; 29,76 M.-%), Gips (G; 2,67 M.-%) und Anhydrit (A; 2,67 M.-%) hergestellt. Alle Hüttensande wurden zuvor auf eine Feinheit von ca. 3700 cm2/g nach Blaine gemahlen. In Tabelle 1 ist die mittels Röntgenfluoreszenzanalyse ermittelte chemische Zusammensetzung der Hüttensande sowie der anderen Hochofenzementbestandteile zusammengefasst.

Nach zweitägiger Hydratation der mittels Hüttensande C, D, E, O, P, oder Q angesetzten Hochofenzemente wurde die Normmörteldruckfestigkeit nach DIN-Norm EN 196-10 bestimmt.

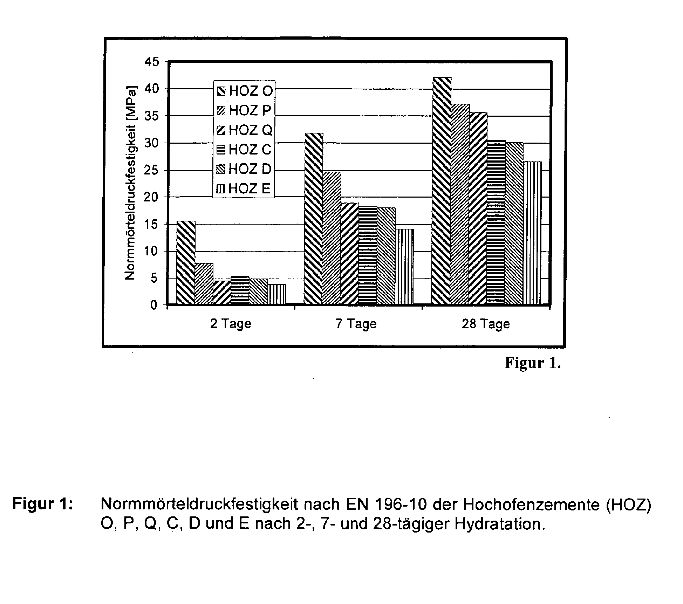

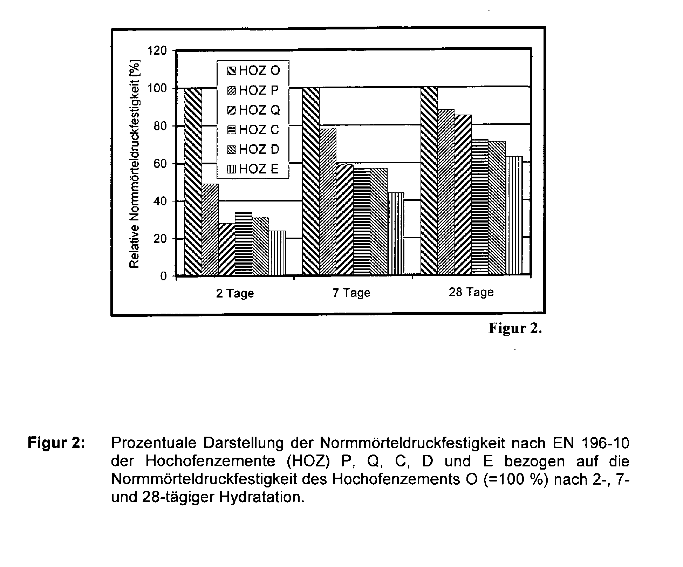

Hierbei zeigt der Hochofenzement O von allen untersuchten Hochofenzementen die höchste Normmörteldruckfestigkeit. (Figur 1). Auch im weiteren Verlauf der Festigkeitsentwicklung entspricht er den leistungsstärksten Hochofenzementen. Hochofenzement Q hingegen zeigt eine ausgesprochen geringe Frühfestigkeit und bleibt auch zu allen Prüfaltern hinter der Druckfestigkeit des Hochofenzements O zurück. Die ermittelten Festigkeitswerte für Hochofenzement P liegen zwischen denen der Zemente O und Q. Auch die Zemente C, D und E gehören wie Zement Q zu den leistungsschwachen Hüttensanden hinsichtlich der Frühfestigkeit der daraus hergestellten Hochofenzementnormmörtel. Im direkten Vergleich verläuft die Festigkeitsentwicklung der Normmörtel mit geringer Frühfestigkeit jedoch unterschiedlich. So zeigt der Hochofenzement Q gegenüber Hochofenzement E nach 28 Tagen Hydratation eine um 10 MPa höhere Normmörteldruckfestigkeit, obwohl die 2-Tage-Normdruckfestigkeiten der beiden Hochofenzemente annähernd gleich sind. Die unterschiedlich starke Nachhärtung der Hochofenzemente ist besonders deutlich in Bild 2 zu erkennen, in dem die Normmörteldruckfestigkeit von Hochofenzement O zu allen Prüfaltern gleich 100 % gesetzt wurde. Die Normmörteldruckfestigkeiten aller anderen Hochofenzemente sind prozentual dazu dargestellt. Die Druckfestigkeit von Hochofenzement Q beispielsweise erreicht nach 2-tägiger Hydratation nur etwa 28 % der Druckfestigkeit von Hochofenzement O, nach 28 Tagen jedoch bereits 85 %. Anders ausgedrückt: Die 2-Tage- Festigkeit von Hochofenzement O ist nach 28 Tagen um den Faktor 2,7 angestiegen, die von Hochofenzement Q jedoch um den Faktor 8,1. Der Hochofenzement Q zeigt also im Verlaufe der Hydratation eine enorme Steigerung seiner Leistungsfähigkeit, während er zu Beginn der Hydratation sehr deutlich unter dem Leistungsniveau des Hochofenzements O bleibt.

Den Hochofenzementen wurden reaktive Aluminate zugemischt, um zu prüfen, ob sich die Frühfestigkeit insbesondere der leistungsschwachen Hochofenzemente verbessern lässt. Metakaolin (MK), Calciumaluminatzement (CA) und Aluminiumhydroxid (AH) wurden dabei als Aluminate eingesetzt. Die Dosierung der Additive im Gemisch Hochofenzement/Additiv betrug für MK und CA jeweils 5 M.-% und für AH 3 M.-%. AH wurde schwächer dosiert, weil sein Aluminiumgehalt höher ist (siehe Tabelle 2). Metakaolin wurde durch Tempern von Kaolin bei 700 °C hergestellt. Als Inert-Additiv wurde den Hochofenzementen 5 M.-% Kalksteinmehl (KS) zugemischt, um den Einfluss der Verringerung des Hochofenzementanteils im Normmörtel auf dessen Festigkeitsentwicklung zu berücksichtigen.

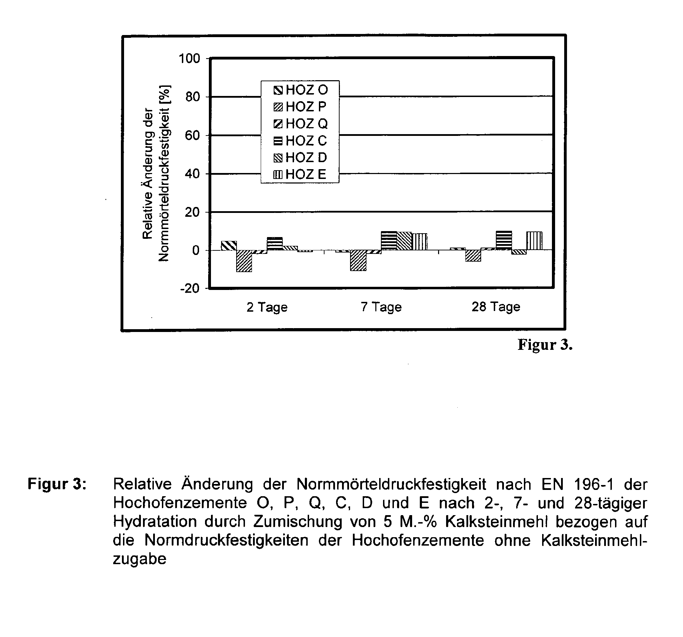

Die relative Änderung der Normmörteldruckfestigkeiten der Hochofenzemente durch die Zumischung von 5 M.-% Kalksteinmehl bezogen auf die Druckfestigkeit der entsprechenden Hochofenzemente ohne Zumischung von Kalksteinmehl ist in Figur 3 visualisiert. Für einen einfachen direkten Vergleich wurde die gleiche Ordinatenskalierung verwendet wie in Bild 5. Es zeigte sich hierbei, dass die Druckfestigkeit sich durch die Zugabe von Kalksteinmehl nur geringfügig ändert, sie steigt maximal um 10% an und bei dem Hochofenzement P zeit sich sogar eine Abnahme der Druckfestigkeit um bis zu 13%. Das Kalksteinmehl verhält sich also tatsächlich als Inert-Additiv.

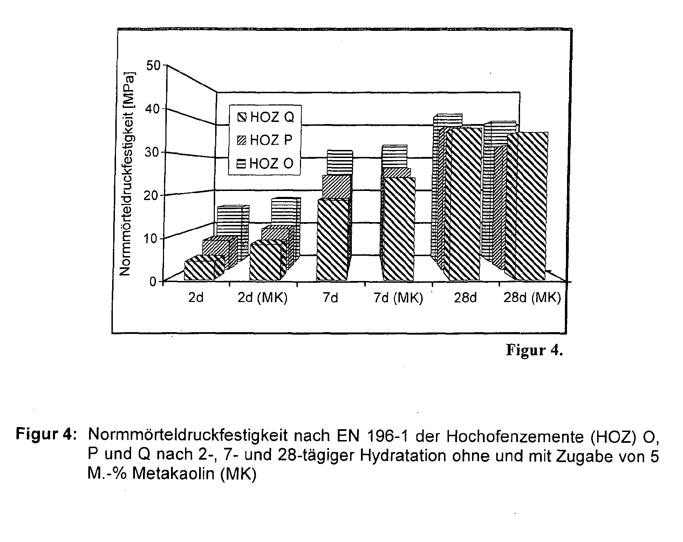

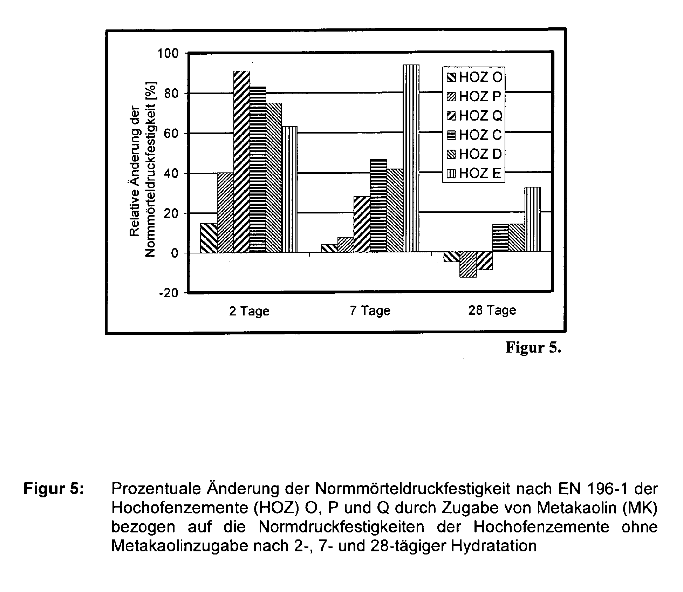

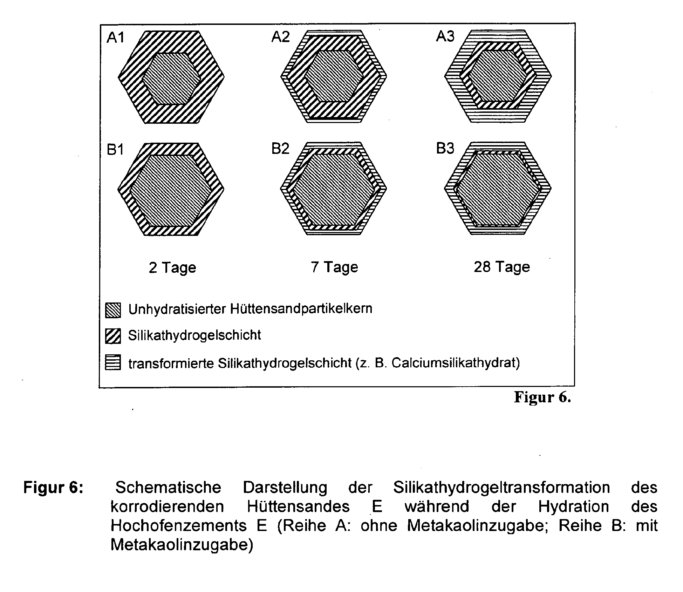

Metakaolin wurde allen Hochofenzementen als Additiv zugesetzt. Figur 4 zeigt die Normmörteldruckfestigkeit der Hochofenzemente O, P und Q nach 2-, 7- und 28-tägiger Hydratation ohne und mit Zugabe von Metakaolin. Alle drei Hochofenzemente gewinnen durch die Zugabe von Metakaolin deutlich an Frühfestigkeit, am stärksten ist der Effekt beim Hochofenzement Q, gefolgt von Hochofenzement P und O. Die Normmörteldruckfestigkeit nach 28-tägiger Hydratation wird durch die Zugabe von Metakaolin leicht gesenkt. Die stärkste Absenkung der 28-Tage-Normdruckfestigkeit erfährt dabei Zement P. Dieser Hochofenzement reagiert allerdings bereits auf die Zugabe von Kalksteinmehl mit verringerten Druckfestigkeiten zu allen Prüfaltern (s. Figur 3). In Figur 5 ist die Änderung der Normmörteldruckfestigkeit nach EN 196-1 durch Zugabe von 5 M.-% Metakaolin (MK) für die Hochofenzemente O, P, Q, C, D und E nach 2-, 7- und 28-tägiger Hydratation graphisch dargestellt. Die prozentualen Angaben beziehen sich auf die Normdruckfestigkeiten der Hochofenzemente ohne Metakaolinzugabe. Im Vergleich zu den Änderungen der Druckfestigkeit durch Zugabe von 5 M.-% Kalksteinmehl hat Metakaolin einen sehr deutlichen Einfluss auf die Druckfestigkeit der Hochofenzementnormmörtel. Die Erhöhung der Druckfestigkeit nach 2 Tagen Hydratation ist beim Hochofenzement O erwartungsgemäß am geringsten ausgeprägt. Der darin verarbeitete Hüttensand HS O weist nach dem stöchiometrischen Kalkulationsansatz nur einen geringen Silikatüberschuss auf (Tabelle3). Dementsprechend kann eine Verbesserung der Frühfestigkeit durch Hydrogelbindung bei Hochofenzement O nur gering sein. Für die stöchiometrische Berechnung des Silikatüberschusses wurde angenommen, dass sich in den sich bildenden Alumosilikaten ein Al/Si-Verhältnis von 1 und in den CSH-Phasen ein Ca/Si-Verhältnis von 2 einstellt.

Im Vergleich zu Hochofenzement O muss sich eine Aluminatzugabe bei den Hochofenzementen P, Q, C, D und E nach zwei Tagen deutlicher positiv auf die Normmörteldruckfestigkeit auswirken, da sie einen starken rechnerischen Silikatüberschuss besitzen. Die Hochofenzemente Q, C, D und E zeigen tatsächlich eine starke Erhöhung der 2-Tage-Normdruckfestigkeit zwischen 63 und 91 % gegenüber den betreffenden Hochofenzementen ohne Metakaolinzusatz. Bei Hochofenzement P beträgt die relative Änderung der Festigkeit nur etwa 40 %, obwohl der rechnerische Silikatüberschuss von Hüttensand HS P mit 6,70 Mol-% etwas höher ist als der von Hüttensand HS C (5,41 Mol-%). Hochofenzement E enthält zwar den Hüttensand E mit dem höchsten rechnerischen Silikatüberschuss, zeigt jedoch nach 2 Tagen Hydratation nicht den größten Festigkeitszuwachs infolge Metakaolinzugabe. Überraschend ist jedoch der vergleichsweise starke Festigkeitszuwachs der Normdruckfestigkeit dieses Hochofenzements nach siebentägiger Hydratation von 93 %. Auch nach 28 Tagen ist der Festigkeitszuwachs durch Metakaolinzugabe bei Hochofenzement E mit ca. 32 % noch sehr hoch. Eine mögliche Ursache für dieses Phänomen könnte in der besonders starken Korrosionsneigung des Hüttensandes HS E liegen. Dieser Hüttensand zeichnet sich bei der Suspendierung in Wasser durch die schnelle Ausprägung sehr starker, recht reiner Silikathydrogelschichten um noch nicht korrodierte Hüttensandpartikelkerne aus. Bei einer schnell fortschreitenden Korrosion des Hüttensandes im Hochofenzement kann durch die Ausprägung starker plastischer Hydrogelsäume die Normmörteldruckfestigkeit des Hochofenzements E ohne Metakaolin nach sieben Tagen besonders stark unter sein potentielles Leistungsniveau abgesenkt sein. Eine weitgehende, mit hoher Wahrscheinlichkeit diffusionsgesteuerte Transformation des Hydrogels in belastbare, nicht plastische Phasen und damit auch die Entwicklung hoher Normmörteldruckfestigkeiten dauert folgerichtig länger (Bild 6, A1-A2). Die Bildung von Calciumsilikathydraten durch Diffusion von gelöstem Calcium in das Silikathydrogel stellt eine mögliche Geltransformation dar. Die Zugabe von Metakaolin kann jedoch bereits zu Beginn der Hydratation den Grad der Hüttensandglaskorrosion reduzieren. Dadurch wird die Masse und Schichtstärke des gebildeten Hydrogels verringert (Bild 6, B1).

Eine weitgehende Umwandlung dieses Silikathydrogels in weniger plastische und damit mechanisch belastbare Phasen kann deshalb schneller erfolgen (Figur, B2-B3). Die Menge festigkeitsmindernden Hydrogels wäre unter diesen Bedingungen nach sieben Tagen Hydratation geringer als im metakaolinfreien Hochofenzement.

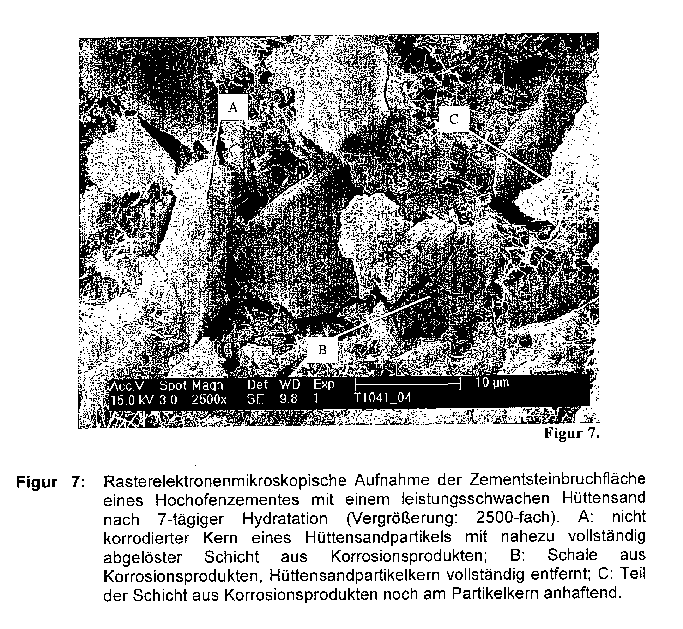

Die sehr starke relative Verbesserung der Normmörteldruckfestigkeit des Hochofenzements E vor allem nach 7- aber auch noch nach 28-tägiger Hydratation lässt sich durch diesen mechanistischen Interpretationsansatz erklären. In der in Figur 7 dargestellten rasterelektronenmikroskopischen Aufnahme der Bruchfläche eines sieben Tage hydratisierten vergleichbar leistungsschwachen Hochofenzements wird die Bedeutung starker Korrosionsschichten für die Gefügebelastbarkeit erkennbar. Diese Bruchfläche wurde durch Druckbelastung des entsprechenden Zementsteinkörpers erzeugt. Die durch Korrosion des Hüttensandglases erzeugten starken Säume aus Korrosionsprodukten stellen zumindest zum unhydratisierten Hüttensandpartikelkern einen schlechten Kontakt her. Die Kontaktzone ist somit eine Verbundschwachstelle im Zementsteingefüge. Auf der Zementsteinbruchfläche sind die Säume aus Korrosionsprodukten teilweise vom unhydratisierten Kern abgelöst und legen diesen frei. Der schlechte Verbund zwischen der Hülle aus Korrosionsprodukten und dem noch nicht korrodierten Hüttensandpartikelkern verschlechtert damit auch die Zugbelastbarkeit des Zementsteins. Eine verringerte Zugbelastbarkeit des Gefüges in Verbindung mit den plastischen Eigenschaften der Hydrogelsäume führt zwangsläufig zu geringen Druckfestigkeiten.

Interessant ist das abweichende Verhalten des Hochofenzementes C mit dem titandioxidreichen Hüttensand HS C. Zu frühen Hydratationszeiten ist seine Normmörteldruckfestigkeit im Vergleich zu den anderen Hochofenzementen und im Hinblick auf seinen Silikatüberschuss (siehe Tabelle 3) besonders stark verringert. Erst zu späteren Hydratationszeitpunkten erhöht sich die Erhärtungsgeschwindigkeit dieses Hochofenzementmörtels. Daraus folgt, dass neben dem Silikatüberschuss auch der Titandioxidgehalt für die Festigkeitsabsenkung verantwortlich sein kann. Die Frühfestigkeit des Hochofenzements C wird durch die speziellen TiO₂-assoziierten Eigenschaften des von Hüttensand HS C erzeugten Silikathydrogels besonders stark verringert. Deshalb ist die relative Verbesserung der Druckfestigkeit von Hochofenzement C infolge Bindung bzw. Vermeidung dieses speziellen Silikathydrogels aus Hüttensand HS C durch Zugabe von reaktiven aluminiumhaltigen Additiven auch besonders stark ausgeprägt. Bei dem Hochofenzement C ist der relative Festigkeitsanstieg durch Metakaolinzugabe nach zweitägiger Hydratation mit 83 % stärker als z. B. beim Hochofenzement E (75 %) mit dem Hüttensand HS E, der den größten rechnerischen Silikatüberschuss besitzt (Figur 5, Tabelle 3). Den größten Festigkeitszuwachs von 91 % durch Metakaolinzugabe nach zweitägiger Hydratation zeigt entsprechend der Bedeutung des Titandioxids der Hochofenzement Q mit dem titandioxidreichsten Hüttensand HS Q (Figur 5, Tabelle 1).

Ein erhöhter Titandioxidgehalt im Hüttensand führt also im hydratisierenden Hochofenzement zur Bildung von Silikathydrogelen mit besonders kritischen Eigenschaften im Hinblick auf die Druckbelastbarkeit des Hochofenzementsteins.

Diese Bedeutung des TiO2-Gehaltes für die Frühfestigkeit wird insbesondere deutlich, wenn man die relative Erhöhung der Frühfestigkeit mit den Silikatüberschüssen einerseits und den TiO2-Gehalten andererseits in Beziehung setzt. Für die Ti02-Gehalte ergibt sich eine nahezu perfekte Korrelation, bei der nur der wegen seiner hohen Korrosionsneigung bemerkenswerte Hüttensand E eine Ausnahmestellung einnimmt:
Relativer Silikatüberschuss: **E > D > Q >P > C > O**
Relativer Festigkeitsanstieg: **Q > C > D >E > P > O**
Relativer TIO₂-Gehalt: **Q>C>D>P>O>E**

| | **HOZ Q** | **HOZ C** | **HOZ D** | **HOZ P** | **HOZ O** |
|---|---|---|---|---|---|
| **TiO2** | 1,91 | 1,39 | 0,87 | 0,66 | 0,56 |
| **rel.Festigkeitserh**. | 91 | 83 | 75 | 40 | 14 |

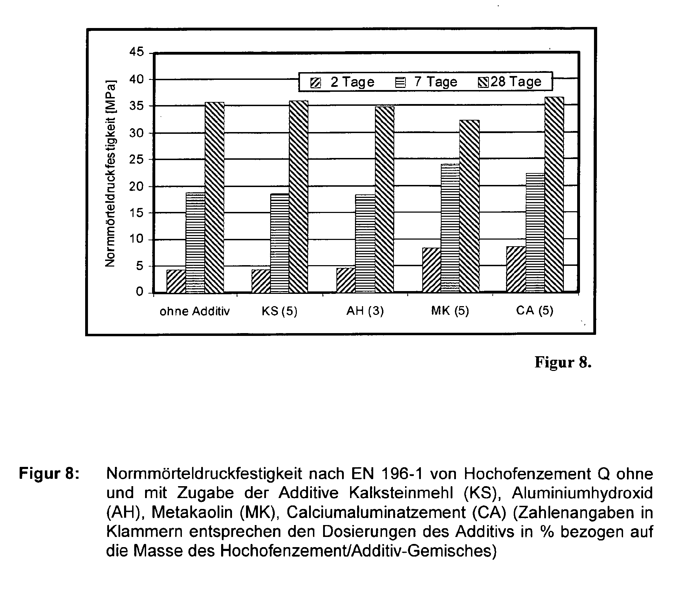

An Hochofenzement Q wurde neben der Wirkung von Metakaolin (MK) auch der Einfluss von Calciumaluminatzement (CA) und Aluminumhydroxid (AH) auf dessen Frühfestigkeit getestet. Im Gegensatz zu Metakaolin verfügt Calciumaluminatzement neben Aluminat auch über höhere Mengen Calcium (s. Tabelle 2). Somit ist theoretisch die Bindung von Silikathydrogel sowohl in Form von Alumosilikaten als auch in Form von CSH möglich. Die diffusionsgesteuerte Wandlung von Silikathydrogelen in CSH-Phasen verläuft wahrscheinlich langsamer als die oberflächliche Alumosilikat-Bildung. Außerdem stellt das mit dem Aluminium des CA gebildete Alumosilikat auf der Geloberfläche auch für Calcium eine Diffusionsbarriere dar. Deshalb sollte sich eine Wirkung des Calciums bei gleichzeitiger Anwesenheit von Aluminium erst spät ausprägen. Die Wirkung der verschiedenen aluminiumhaltigen Additive auf die Normmörteldruckfestigkeit von Hochofenzement Q ist in Fig. 8 dargestellt. Der Hochofenzement Q ohne Additiv sowie mit dem Inert-Additiv Kalksteinmehl (KS) dienen dabei dem einfachen Vergleich mit der Druckfestigkeit der additivfreien Probe bzw. zur Berücksichtigung des Einflusses der Verdünnung des Hochofenzementanteils im Normmörtel auf die Druckfestigkeit.

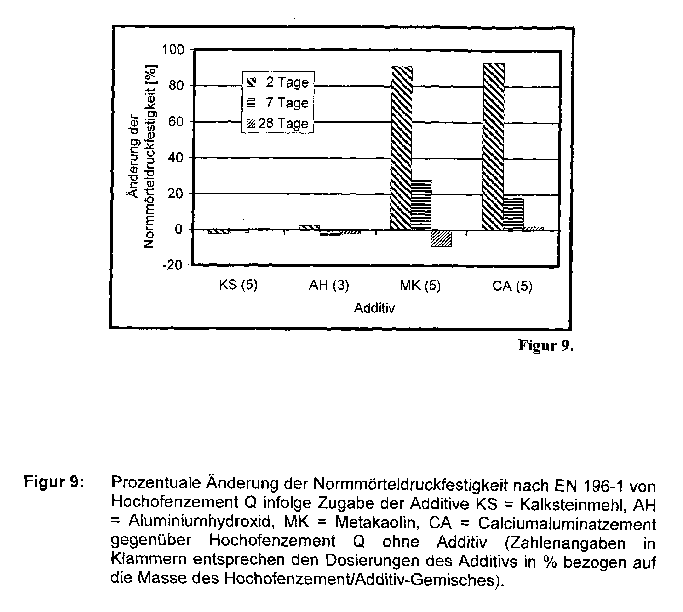

Die frühfestigkeitserhöhende Wirkung der Additive MK und CA ist deutlich erkennbar. Klarer ist diese Wirkung in Fig. 9 herausgearbeitet. Hier sind die Änderungen der Festigkeiten des Zements Q mit den Additiven gegenüber dem Zement Q ohne Additive nach 2-, 7- und 28-tägiger Hydratation prozentual dargestellt. Die durch CA hervorgerufene Erhöhung der Normmörteldruckfestigkeit von Zement Q ist wie bei MK auf die frühen Hydratationszeiten beschränkt. MK und CA erhöhen gleichermaßen die 2-Tage-Festigkeit um über 90 %. Während jedoch die MK-Zugabe die 7-Tage-Festigkeit mit 28 % auf den für diesen Hydratationszeitpunkt höchsten Wert für alle Additive bringt, bricht die 28-Tage- Festigkeit gegenüber dem Zement Q ohne Additiv um ca. 10 % ein. Bei Zugabe von CA ist die 28-Tage-Festigkeit zwar annähernd unverändert (+ 2 %), die 7-Tage-Festigkeit ist jedoch nur um 18 % gegenüber dem CAfreien Zement erhöht. Die unterschiedliche Beeinflussung der 28-Tage-Festigkeit durch MK und CA ist möglicherweise auf das zusätzliche Angebot von Calcium aus CA für den Aufbau von festigkeitsfördernden CSH-Phasen zurückzuführen. Das erhöhte Calciumangebot sollte aufgrund der oberflächlichen Diffusionsbarriere aus Alumosilikaten in der Tat erst zu späteren Hydratationszeitpunkten bemerkbar machen. In jedem Fall aber zeigt sich eine besonders starke positive Wirkung auf die Druckfestigkeit zu den frühen Hydratationszeitpunkten, zu denen entsprechend der Silikathydrogelhypothese die Existenz von festigkeitsminderndem Silikathydrogel besonders wahrscheinlich ist. Auf diese Weise lässt sich die Frühfestigkeit von leistungsschwachen Hochofenzementen deutlich verbessern, ohne jedoch gleichzeitig deren Endfestigkeit zu erhöhen.

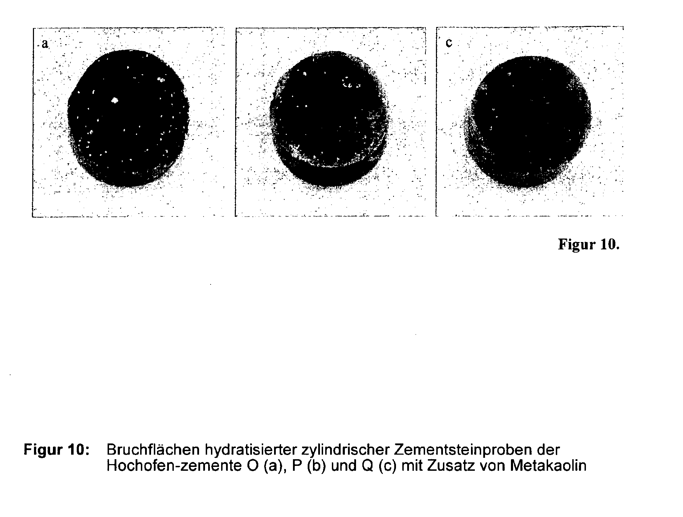

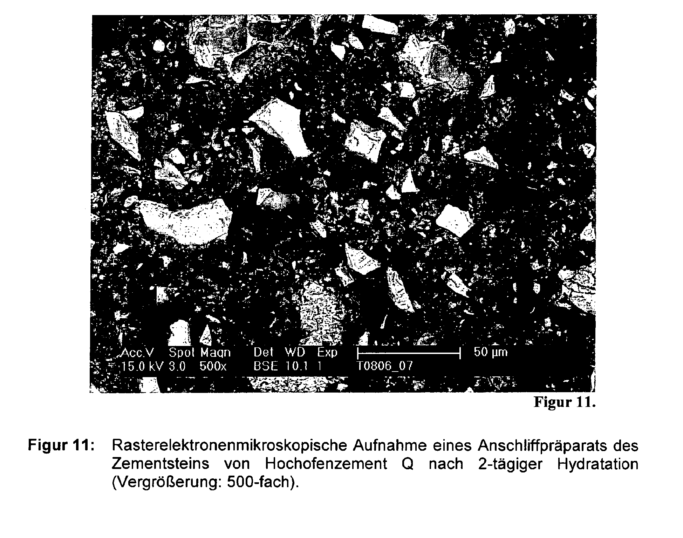

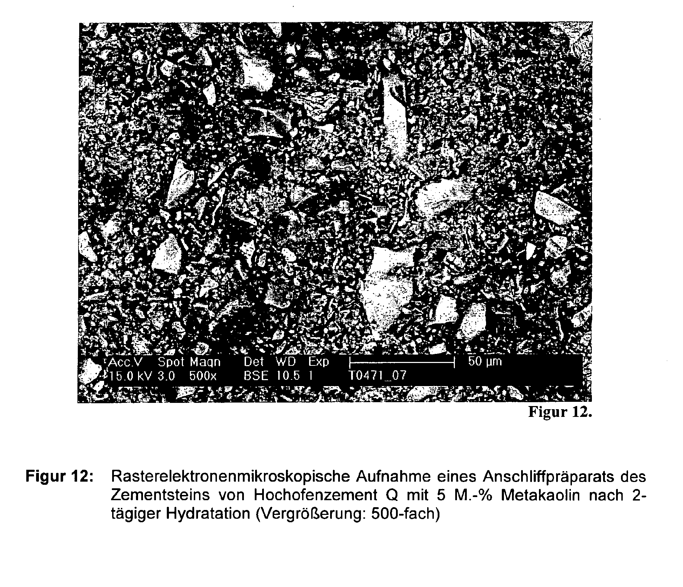

Hüttensand HS O besitzt rechnerisch einen geringeren Silikatüberschuss (1,32 Mol-% Si) als die Hüttensande HS P (6,70 Mol-% Si) und HS Q (7,17 Mol-% Si). Deshalb sollte ein Verbrauch von MK bei Zement O schwächer ausgeprägt sein als bei den Zementen P und Q. Nach Zugabe von Wasser zur Mischung des Hochofenzements O mit 5 M.-% MK sind helle Aggregate von MK auf der Bruchfläche des erhärtenden Zementsteins zu sehen (Fig. 10). Bei Hochofenzement P sind solche Aggregate weniger zahlreich und kleiner. Und bei Hochofenzement Q schließlich sind solche MK-Aggregate kaum noch zu erkennen. Wenn im Zementstein von Zement Q kein MK zu sehen ist, weil es durch die Umsetzung mit silikatreichem Hydrogel verbraucht wurde, dann sollte sich dies zudem in einer Verringerung des Hydrogelanteils im Zementsteingefüge bemerkbar machen. Im Gefüge des Hochofenzements O hingegen sollte eine solche Veränderung nur schwach ausgeprägt sein. Die Fig. 11 und 12 zeigen rasterelektronenmikroskopische Aufnahmen von Anschliffpräparaten des Zementsteins von Hochofenzement Q ohne bzw. mit MK. In Fig. 11 ist deutlich zu erkennen, dass sich wesentliche Teile des Gefüges von Zement Q ohne MK als unstrukturierte Masse darstellen, in der vornehmlich die groben Hüttensandpartikel zu erkennen sind.

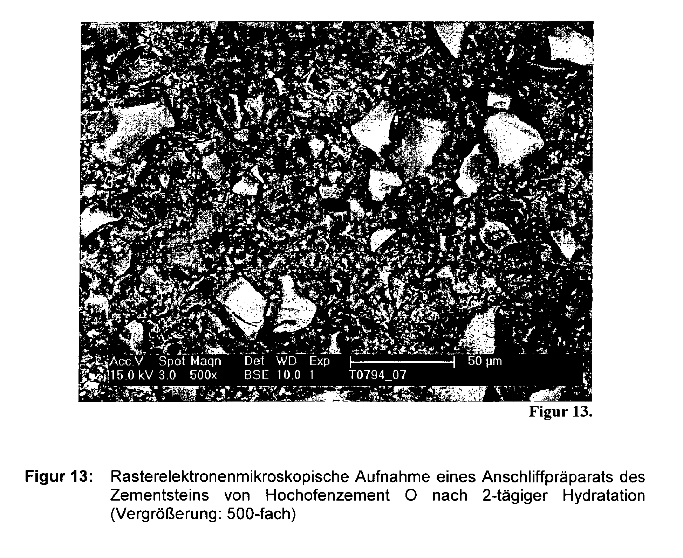

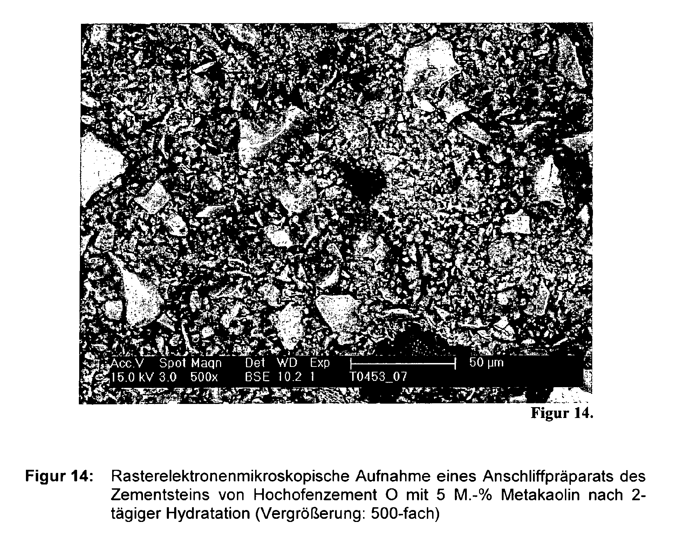

Durch Metakaolin wird das Gefüge deutlich verändert. Es erscheint feinkörniger strukturiert. Das Gefüge von Hochofenzement O erscheint im Vergleich zu Zement Q auch ohne Metakaolinzusatz besser strukturiert und der Gefügewandel durch Metakaolin ist dementsprechend schwächer ausgeprägt (Fig. 13 und 14). Die unterschiedliche Wirkung von Metakaolin drückt sich also nicht nur in der Normmörteldruckfestigkeit der Hochofenzemente O, P und Q aus, sondern spiegelt sich sogar im optischen Erscheinungsbild ihrer Zementsteingefüge wieder.

Durch den direkten Vergleich der Wirkung einer Metakaolinzugabe auf die Hydratation der Hochofenzemente O, P und Q wird deutlich, dass Metakaolin nicht unabhängig von der Hydratation des jeweiligen Zements, sondern mit dessen Bestandteilen bzw. Reaktionsprodukten reagiert. Besonders deutlich ist die Umsetzung von Metakaolin im Zementsteingefüge des Zements Q zu erkennen, der nach der Hydrogelhypothese besonders viel freies Silikathydrogel erzeugen kann.

Die Bindung der Silikathydrogele führt zu einer Verbesserung der Frühfestigkeit der untersuchten Hochofenzemente. Vor allem bei Hochofenzementen mit sehr geringen 2-Tage-Festigkeiten ist der relative Festigkeitszuwachs mit oft mehr als 90 % besonders stark. Diese Hochofenzemente weisen auch den größten Silikatüberschuss auf. Damit ist der Silikatanteil gemeint, der nach stöchiometrischer Berechnung nicht durch den verfügbaren Aluminumanteil der Hüttensande in Form von Alumosilikaten oder durch den Calciumanteil der Hüttensande in Form von Calciumsilikathydraten gebunden werden kann. Bei den leistungsstarken Hüttensanden mit geringem Silikatüberschuss sind die Normmörteldruckfestigkeiten der daraus hergestellten Hochofenzemente nach kurzen Hydratationszeiten bereits relativ hoch. Da sie nicht zur Freisetzung von Silikathydrogelen neigen, ist auch die Verbesserung der Frühfestigkeiten durch die Zugabe reaktiver Aluminate bei diesen Hochofenzementen nur schwach ausgeprägt. Die Verbesserung der Frühfestigkeit von leistungsschwachen Hochofenzementen gelingt ohne gleichzeitig die Endfestigkeiten zu erhöhen. Das hat damit zu tun, dass die Silikathydrogele vor allem nach kurzen Hydratationszeiten gebildet werden. Im Verlauf der weiteren Hydratation werden sie auch ohne reaktive Aluminate in weniger plastische Phasen transformiert. Die Verringerung der Normmörteldruckfestigkeit von Hochofenzementen infolge der Bildung von Silikathydrogelen und auch die Möglichkeit, die Druckfestigkeit durch Bindung der plastischen Silikathydrogele mit reaktiven Aluminaten zu binden, ist deshalb vor allem auf die frühen Phasen der Hydratation beschränkt.

### Tabelle 1.

**Tabelle 1: Chemische Zusammensetzung der Mischungsbestandteile der untersuchten Hochofenzemente (Angaben in Masse-%, glühverlusthaltig; HS: Hüttensand; PZ: Portlandzement; G: Gips; A: Anhydrit)**

| | **HS O** | **HS P** | **HS Q** | **HS C** | **HS D** | **HS E** | **PZ** | **G** | **A** |
|---|---|---|---|---|---|---|---|---|---|
| **SiO₂** | 30,59 | 35,48 | 35,04 | 35,09 | 35,90 | 38,01 | 20,95 | 6,24 | 0,28 |
| **Al₂O₃** | 16,46 | 14,37 | 13,93 | 11,33 | 10,83 | 9,21 | 4,24 | 1,89 | <0,01 |
| **TiO₂** | 0,56 | 0,66 | 1,91 | 1,39 | 0,87 | 0,33 | 0,14 | 0,14 | 0,07 |
| **P₂O₅** | 0,02 | 0,01 | 0,01 | < 0,01 | < 0,01 | <0,01 | 0,01 | 0,03 | 0,03 |
| **Fe₂O₃** | 2,03 | 0,46 | 0,58 | 1,33 | 0,44 | 0,29 | 0,10 | 0,80 | <0,01 |
| **Mn₂O₃** | 0,04 | 0,92 | 0,88 | 0,36 | 0,57 | 1,18 | 0,03 | 0,02 | 0,01 |
| **CaO** | 35,35 | 35,42 | 34,50 | 40,31 | 37,75 | 38,02 | 69,60 | 27,92 | 39,93 |
| **MgO** | 12,43 | 10,69 | 10,59 | 7,88 | 11,05 | 10,58 | 0,66 | 2,18 | 0,93 |
| **SO₃** | 0,03 | 0,01 | 0,04 | < 0,01 | < 0,01 | <0,01 | 2,27 | 39,67 | 56,73 |
| **K₂O** | 0,61 | 0,76 | 1,06 | 0,63 | 0,78 | 1,03 | 0,92 | 0,48 | 0,01 |
| **Na₂O** | 0,18 | 0,27 | 0,41 | 0,42 | 0,47 | 0,39 | 0,07 | 0,18 | 0,05 |
| **CO₂** | 0,40 | 0,16 | 0,24 | 0,24 | 0,22 | 0,20 | 2,95 | 2,93 | 1,61 |
| **H₂O** | 0,70 | 0,28 | 0,32 | 0,24 | 0,33 | 0,11 | 0,75 | 18,49 | 0,38 |
| **S²⁻** | 1,26 | 0,99 | 0,93 | 1,40 | 1,47 | 1,22 | - | - | - |

### Tabelle 2.

**Tabelle 2: Chemische Zusammensetzung der Additive Kalksteinmehl (KS), Aluminiumhydroxid (AH), Metakaolin (MK) und Calciumaluminatzement (CA)**

| | **KS** | **AH** | **MK** | **CA** |
|---|---|---|---|---|
| **SiO₂** | 1,96 | 0,01 | 51,82 | 4,60 |
| **Al₂O₃** | 0,57 | 64,49 | 44,12 | 51,98 |
| **TiO₂** | 0,04 | 0,01 | 1,42 | 2,15 |
| **P₂O₅** | 0,11 | 0,01 | 0,11 | 0,14 |
| **Fe₂O₃** | 0,38 | 0,03 | 0,84 | 1,51 |
| **Mn₂O₃** | 0,06 | 0,01 | 0,01 | 0,01 |
| **CaO** | 54,57 | 0,01 | 0,01 | 38,45 |
| **MgO** | 0,52 | 0,20 | 0,15 | 0,64 |
| **SO₃** | 0,02 | 0,03 | 0,06 | 0,06 |
| **K₂O** | 0,13 | 0,01 | 0,17 | 0,15 |
| **Na₂O** | 0,02 | 0,11 | 0,03 | 0,02 |
| **CO₂** | 41,49 | 0,07 | 0,05 | 0,12 |
| **H₂O** | 0,31 | 35,00 | 1,22 | 0,18 |

### Tabelle 3.

**Tabelle 3: Tabelle 3:Rechnerischer Silikatüberschuss in Mol-% Si der Hüttensande O, P, Q, C, D und E, der stöchiometrisch nicht vom Aluminiumüberschuss Alnh und Calciumanteil des jeweiligen Hüttensandes gebunden werden kann (Annahme für die Berechnung: Verhältnis Al/Si = 1; Verhältnis Ca/Si = 2)**

| Hüttensand | HS O | HS P | HS Q | HS C | HS D | HS E |
|---|---|---|---|---|---|---|
| Sikikatüberschuss [Mol-%Si] | 1,32 | 6,70 | 7,17 | 5,41 | 9,86 | 13,13 |

## Patentansprüche

1. Bindemittel enthaltend ein Additiv, **dadurch gekennzeichnet, dass** das Additiv mindestens eine reaktive Aluminium-Verbindung ist, die die Reaktion von zugesetztem Wasser und zugesetzten und/oder endogenen Silikaten zu silikatreichem Hydrogel verlangsamt, vermindert und/oder inhibiert und/oder entstandenes Silikathydrogel bindet.

2. Bindemittel, insbesondere nach Anspruch 1, enthaltend ein Additiv, **dadurch gekennzeichnet, daß** das Additiv eine reaktive Aluminium-Verbindung ist, die in der Lage ist, in Gegenwart von Wasser und Silikaten Alumosilikat, Calciumsilikathydrat und/oder Calciumaluminathydrat auszubilden.

3. Bindemittel nach Anspruch 1 oder 2, **dadurch gekennzeichnet, daß** als reaktive Aluminium-Verbindung Metakaolin, Calciumaluminat, Calciumaluminatzement, aluminiumreiche Flugasche und/oder eine Mischung enthaltend eine oder beide Verbindungen eingesetzt wird.

4. Bindemittel nach einem der Ansprüche 1 bis 3, **dadurch gekennzeichnet, daß** es einen Portlandzement der Norm CEM I, einen Portlandkompositzement der Norm CEM II, Portlandhüttenzement der Norm CEM II/S, einen Hochofenzement der Norm CEM III, einen Puzzolanzement der Norm CEM IV oder einen Kompositzement der Norm CEM V oder eine Mischung mindestens zweier der genannten Zemente umfasst.

5. Bindemittel nach einem der Ansprüche 1 bis 4, **dadurch gekennzeichnet, daß** es ein Additiv mit einem Überschuss an Silikaten aufweist, die in Gegenwart von Wasser ein silikatreiches Hydrogel bilden.

6. Bindemittel nach Anspruch 5, **dadurch gekennzeichnet, daß** der Überschuss an Silikat, welcher insbesondere nicht in einem Alumosilikat oder Calciumsilikathydrat gebunden ist oder gebunden werden kann, zwischen 0,5 bis 20 Mol.-% Silizium im Zusatzstoff liegt.

7. Bindemittel nach einem der Ansprüche 1 bis 6, **dadurch gekennzeichnet, dass** es als Additiv einen Hüttensand und/oder Puzzolan enthält.

8. Zusammensetzung umfassend Hüttensand und ein Additiv, **dadurch gekennzeichnet, daß**
- das Additiv mindestens eine reaktive Aluminium-Verbindung ist, die die Reaktion von zugesetztem Wasser und Silikaten des Hüttensandes zu silikatreichem Hydrogel verlangsamt, vermindert und/oder inhibiert und/oder
- daß das Additiv eine reaktive Aluminium-Verbindung ist, die in der Lage ist, in Gegenwart von Wasser und Silikaten Alumosilikat, Calciumsilikathydrat und/oder Calciumaluminathydrat auszubilden.

9. Zusammensetzung nach Anspruch 9, **dadurch gekennzeichnet, dass** die reaktive Aluminium-Verbindung Metakaolin, Calciumaluminat, Calciumaluminatzement und/oder eine Mischung enthaltend eine oder mehrere Verbindungen ist.

10. Zusammensetzung nach einem der Ansprüche 9 oder 10, **dadurch gekennzeichnet, daß** sie ein Inert-Additiv aufweist, dessen Anteil in Gew.% an dem Bindemittel den Anteil in Gew.% an dem Bindemittel des Additivs nicht übersteigt, insbesondere dem Anteil in Gew.% an dem Bindemittel des Additivs entspricht.

11. Verfahren zur Herstellung eines Baustoff, **dadurch gekennzeichnet, daß** einem Gemisch Wasser zugesetzt wird, das Gemisch und das Wasser vermischt werden und zur Bildung des Baustoffs aushärten, wobei das Gemisch ein Bindemittel nach einem der Ansprüche 1 bis 8 und/oder eine Zusammensetzung nach einem der Ansprüche 9 bis 11 aufweist.

12. Verfahren nach Anspruch 11, **dadurch gekennzeichnet, daß** das Gemisch ein Additiv oder eine ein Additiv enthaltende Zusammensetzung aufweist, wobei das Additiv eine reaktive Aluminium-Verbindung ist, die in der Lage ist, in Gegenwart von Wasser Alumosilikat, Calciumsilikathydrat und/oder Calciumaluminathydrat auszubilden, und das Additiv
a) beim Mischen von in dem Gemisch vorhandenen Hüttensand, Portlandlandzement, Gips und Anhydrit
und/oder
b) nach dem Mischen in Schritt a) dem Produkt dieses Mischens in Schritt a)
zugesetzt wird.

13. Verwendung von reaktiven Aluminaten zur Hemmung der Glaskorrosion.

14. Verfahren zur Steuerung der Frühfestigkeit eines Bindemittels durch Zugabe eines reaktiven Aluminats.

15. Verfahren nach Anspruch 14, **dadurch gekennzeichnet, dass** die Erhöhung der Frühfestigkeit proportional zu dem Gehalt an Titandioxid des Bindemittels ist.
